Europäisches Patentamt

European Patent Office

Office européen des brevets

(11) Veröffentlichungsnummer: **0 295 714**
**A1**

## EUROPÄISCHE PATENTANMELDUNG

(21) Anmeldenummer: 88109748.9

(22) Anmeldetag: 18.06.88

(51) Int. Cl.⁴: **F03G 1/00**

(30) Priorität: 19.06.87 DE 3720389

(43) Veröffentlichungstag der Anmeldung:
21.12.88 Patentblatt 88/51

(84) Benannte Vertragsstaaten:
ES GR

(71) Anmelder: BIRKMEYER, Robert
Brühlgasse 5
D-7706 Honstetten(DE)

(72) Erfinder: BIRKMEYER, Robert
Brühlgasse 5
D-7706 Honstetten(DE)

(74) Vertreter: Gleiss, Alf-Olav, Dipl.-Ing.
Patentanwalt Dipl.-Ing. Alf-Olav Gleiss
Silberburg Strasse 187
D-7000 Stuttgart 1(DE)

(54) Vorrichting zur Speicherung von Energie.

(57) Es wird eine Vorrichtung zur Speicherung von Energie vorgeschlagen, die gekennzeichnet ist durch mindestens einen mechanischen Energiespeicher mit einem komprimierbaren oder reversibel verformbaren Medium (1), mindestens eine Einrichtung (3, 4) zur Komprimierung oder Verformung des Mediums (1) und eine Einrichtung (5-10) zur dosierbaren Abgabe der im Energiespeicher enthaltenen Energie.

Figur

EP 0 295 714 A1

## Vorrichtung zur Speicherung von Energie

Die Erfindung betrifft eine Vorrichtung zur Speicherung von Energie.

Es ist bekannt, mechanische Arbeit mit Hilfe von in Batterien und Akkumulatoren gespeicherter elektrischer Energie zu verrichten. So sind beispielsweise in Kraftfahrzeugen Akkumulatoren, die u.a. zum Betreiben des Anlassers dienen, installiert. Zahllose elektrische Geräte zur Verrichtung mechanischer Arbeit, wie z.B. Bohrmaschinen, weisen Batterien oder Akkumulatoren auf.

Nachteil dieser Art der Erzeugung mechanischer Kräfte ist, daß Verluste durch die mechanisch/elektrische Umwandlung auftreten, und daß die Erzeugung bzw. Beseitigung der bei der Herstellung von Akkumulatoren oder Batterien verwendeten Stoffe umweltbelastend ist.

Es ist daher Aufgabe der Erfindung, eine umweltfreundliche Vorrichtung zur Speicherung von Energie zu schaffen.

Diese Aufgabe wird bei einer Vorrichtung der eingangs genannten Art mit Hilfe der in Anspruch 1 genannten Merkmale gelöst.

Die erfindungsgemäße Vorrichtung hat den Vorteil, daß Energie speicherbar ist und, angepaßt an den Bedarfsfall, abgerufen werden kann, wobei eine vollständige Unabhängigkeit von Stromnetzen und Batterien bzw. Akkumulatoren gegeben ist.

Vorteilhafte Ausgestaltungen der Erfindung sind in den Unteransprüchen gekennzeichnet. Besonders vorteilhaft ist es, daß als Energiespeicher sowohl Gasdruck als auch Spiral- und Schraubenfedern verwendet werden können, aber auch, daß der Energiespeicher beliebige Medien, wie zum Beispiel Gase, Luft, Wasser oder Öl enthalten kann.

Die Erfindung wird im folgenden anhand einer Figur näher erläutert. Sie zeigt ein Ausführungsbeispiel der erfindungsgemäßen Vorrichtung mit einem eine Schraubenfeder aufweisenden Energiespeicher.

Die Schraubenfeder 1 wird auf Ihrer einen Seite an ein festes Widerlager 2 angelegt. Die andere Seite der Schraubenfeder steht mit einem verschiebbaren Element, das hier als Wagen 3 ausgebildet ist, in Verbindung. An dem Wagen greift hier ein Wagenheber 4 an, über den Energie in den Energiespeicher bzw. die Schraubenfeder 1 eingespeist werden kann. Ein Zahnstangenelement 5 ist über einen Hebel 6 an dem Wagen 3 angelenkt, wobei der Hebel durch ein oder mehrere Stützelemente 7 geführt wird. Das Zahnstangenelement 5 wirkt mit einer Übersetzungseinrichtung zusammen, die hier ein mit dem Zahnstangenelement 5 kämmendes erstes Zahnrad 8 und ein zweites Zahnrad 9 aufweist.

Eine Bremseinrichtung 10 steht hier mit dem zweiten Zahnrad 9 in Eingriff.

Bei einem hydraulischen oder pneumatischen Energiespeicher kann als Bremseinrichtung ein Ventil eingesetzt werden, über welches das sich expandierende Medium des Energiespeichers bei Abgabe gespeicherter Energie geleitet wird. Um die Energieabgabe zu drossel bzw. zu steuern, kann das Ventil mehr oder weniger geschlossen werden. Die Steuerung der Ventilstellung kann über eine geeignete Steuereinrichtung oder über einen angeschlossenen Verbraucher vorgenommen werden.

Die Funktion der Vorrichtung wird im folgenden näher erläutert.

Wesentlicher Gedanke ist, daß Energie in einen Energiespeicher eingebracht wird. Die bei der Freisetzung der gespeicherten, beispielsweise mechanischen Energie erzeugte Kraft kann mit Hilfe einer Übersetzungseinrichtung an den Bedarfsfall angepaßt werden. Der Speicher kann ein komprimierbares Medium, beispielsweise ein Gas, das in einem dichten Gehäuse eingeschlossen ist, oder ein reversibel verformbares Element, z.B. eine Feder, aufweisen.

Die Energie kann auf beliebige Weise in den Speicher eingebracht werden. Außer einem Wagenheber gemäß dem dargestellten Ausführungsbeispiel kommen auch Kommpressorpumpen oder Flaschenzüge in Frage.

Bei einer pneumatischen Anordnung kann auch die zwischen einer oder mehreren Kommpressorstufe und einem oder mehreren Verbrauchern angeordnete Verbindungsleitung als Energiespeicher dienen. Bei entsprechender Abstimmung zwischen Energieeingabe mittels der Kommpressorstufe und Verbraucher treten bei der Energieübertragung praktisch keine Reibungsverluste auf. Dabei ist in der gesamten pneumatischen Anordnung, unabhängig von der Leitungslänge, der gleiche Druck gegeben.

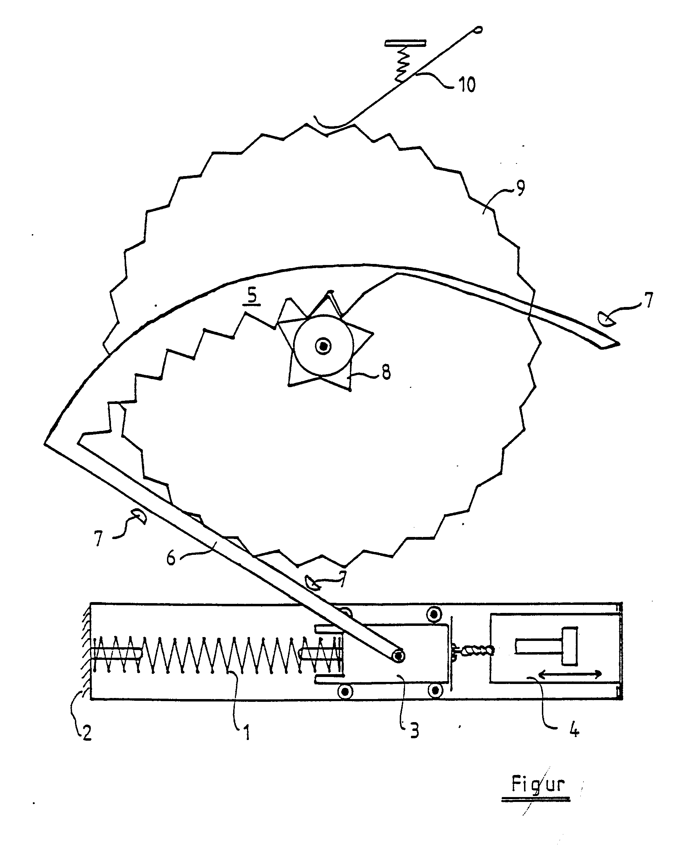

Bei dem in der Figur dargestellten Ausführungsbeispiel wird die Schraubenfeder 1 als Speicherelement verwendet. Sie wird mit Hilfe eines Wagenhebers 4 zusammengedrückt. Denkbar ist es auch, eine als Zugfeder wirkende Schraubenfeder mittels eines Flaschenzugs auseinander zu ziehen, um Energie zu speichern.

Es ist auch möglich, den Wagen 3 mit einer Gewindestange in Verbindung zu bringen, die sich parallel zur Bahn des Wagens erstreckt und die über eine Kurbel mit wählbarem Übersetzungsverhältnis gedreht wird. Durch die Drehung der Gewindestange wird die Schraubenfeder in ihre gespannte Lage gebracht. Nach dem Spannen der Feder kann die Gewindestange weggeschwenkt werden, so daß der Wagen bei der Freigabe der gespeicherten Energie nicht behindert wird.

Die Feder wird dann so lange in der verformten Stellung gehalten, bis Energie gebraucht wird. In diesem Fall wird die Feder über eine geeignete Verbindung, die hier ein Zahnstangenelement 5 mit einem Hebel 6 aufweist, mit einer Übersetzungseinrichtung in Verbindung gebracht. Vorzugsweise kämmt das Zahnstangenelement 5 mit dem ersten Zahnrad 8, das Teil eines Getriebes ist. Bei der Eingabe von Energie in den Energiespeicher kann das Getriebe auch abgekoppelt werden. Wenn sich die gespannte Schraubenfeder entspannt, bewegt sich der Wagen in der Figur nach rechts. Der an dem Wagen angelenkte Hebel 6 führt aufgrund der Abstützung am Stützelement 7 eine Drehbewegung gegen den Uhrzeigersinn aus, so daß das erste Zahnrad 8 durch das Zahnstangenelement 5 gegen den Uhrzeigersinn gedreht wird.

Bei dem dargestellten Ausführungsbeispiel ist zur Vereinfachung nur ein weiteres zweites Zahnrad 9 der Übersetzungseinrichtung dargestellt, das mit einem hier nicht dargestellten Gerät in Eingriff steht. Die Zahl der Zahnräder kann beliebig variiert werden.

Es kann vorgesehen werden, daß das Gerät, beispielsweise eine Bohrmaschine, der Anlasser eines Fahrzeugs oder ähnliches, unmittelbar angetrieben wird. Jedoch ist es auch möglich, an das zweite Zahnrad einen Generator zur Stromerzeugung anzuschließen und mit dem Strom Geräte oder Beleuchtungen zu betreiben.

Durch geeignete Wahl des Übersetzungsverhältnisses kann auch eine große im Speicher vorhandene Kraft umgesetzt werden auf kleine Kräfte. Dadurch kann der Speicher länger Energie liefern.

Die abgegebene Kraft kann durch die skizzierte Bremseinrichtung 10 reguliert werden. Diese ist dazu so ausgelegt, daß die vorzugsweise auf das zweite Zahnrad 9 wirkende Bremskraft einstellbar ist. Die Bremseinrichtung kann aber auch direkt mit dem Energiespeicher bzw. der Feder, aber auch mit dem angetriebenen Gerät kombiniert werden.

Die Übersetzungseinrichtung sowie die Bremseinrichtung können auch Teil des mit der Speichervorrichtung verbundenen Geräts sein.

Die Übersetzungseinrichtung kann auch so ausgelegt werden, daß die abgegebene Drehzahl bzw. das Drehmoment stufenlos variierbar sind. Dazu kann beispielsweise von dem ersten Zahnrad 8 oder dem zweiten Zahnrad 9 ein Kegelrad angetrieben werden, das über ein Kupplungselement, welches beispielsweise als Gummirad ausgebildet ist, mit einer Zylinderwalze in Eingriff steht, wobei die Achse der Zylinderwalze parallel zu einer Außenlinie des Kegelrads angeordnet ist. Das Gummirad dreht sich auf einer parallel zur Achse der Zylinderwalze verlaufenden Achse und ist auf dieser verschiebbar angeordnet, so daß zur wahlfreien Änderung von Drehzahl und Drehmoment verschiedene Durchmesser des Kegelrads auf die Zylinderwalze wirken.

Die Übersetzungseinrichtung kann auch so aufgebaut werden, daß eine Umdrehungsgeschwindigkeit der Eingangs und/oder Ausgangswelle erfaßt wird. In Abhängigkeit von dieser Geschwindigkeit kann ein Steuersignal, beispielsweise mittels eines von der Welle getriebenen Generators, erzeugt werden, mit dem in Abhängigkeit beispielsweise vom Ladezustand des Energiespeichers das Übersetzungsverhältnis variabel einstellbar ist. Auch ist es möglich, das Übersetzungsverhältnis vorzugeben, beispielsweise durch ein manuell betätigbares Steuerorgan.

Überdies ist es möglich, die an ein Gerät abgegebene Energie, beispielsweise die bei Abschaltung des Geräts vorhandene Bewegungsenergie, zurückzugewinnen und in den Speicher einzugeben. Dazu weist die Übersetzungseinrichtung vorzugsweise eine Umkehrstufe bzw. ein Wechselgetriebe auf, durch welches Energie in den Speicher eingegeben wird, d.h. die während der Entspannung der Feder vorliegende Bewegungsrichtung des Wagens 3 wird in diesem Fall umgekehrt und die Feder gespannt.

Nach dem oben Gesagten ergibt sich, daß als Energiespeicher beliebige komprimierbare bzw. reversibel verformbare Medien einsetzbar sind, wobei es gleichgültig ist, wie die Komprimierung bzw. Verformung des Mediums erfolgt. Es ist insbesondere möglich, den Speicher austauschbar auszulegen. Man kann also beispielsweise mehrere Federn in zusammengedrückter Form oder mehrere Speicher mit einem komprimierten Gas bereitstellen und einzeln oder in Gruppen in die Vorrichtung einbringen und die gespeicherte Energie dann ausnutzen. Wenn nur kleine Kräfte zur Komprimierung bzw. Verformung des Mediums im Energiespeicher vorhanden sind, kann auch hier eine geeignete Übersetzung, z.B. ein Getriebe zur Einspeisung der Energie in den Speicher verwendet werden. Durch eine geeignete Steuerung kann das Übersetzungsverhältnis an die Gegebenheiten auch automatisch angepaßt werden. Die Verbindung zwischen Energiespeicher und Gerät bzw. Getriebe kann während der Energieeingabe in den Speicher unterbrochen werden. Überdies kann auch zwischen dem Energiespeicher und dem angetriebenen Gerät ein Freilauf vorgesehen werden.

Grundsätzlich sind die einzelnen oben genannten Merkmale beliebig miteinander kombinierbar.

**Ansprüche**

1. Vorrichtung zur Speicherung von Energie, **gekennzeichnet durch** mindestens einen Energiespeicher mit einem komprimierbaren oder reversibel verformbaren Medium (1),
- mindestens eine Einrichtung (3, 4) zur Komprimierung oder Verformung des Mediums und
- eine Einrichtung (10) zur dosierbaren Abgabe der im Energiespeicher enthaltenen Energie.

2. Vorrichtung nach Anspruch 1, **dadurch gekennzeichnet,** daß der Energiespeicher eine spiral- oder Schraubenfeder (1) aufweist.

3. Vorrichtung nach Anspruch 1, **dadurch gekennzeichnet,** daß der Energiespeicher mit einem Gas gefüllt ist, welches über einen Stempel komprimierbar ist.

4. Vorrichtung nach einem der Ansprüche 1, **dadurch gekennzeichnet,** daß das Medium im Energiespeicher mittels einer mechanischen, pneumatisch, hydraulisch oder elektrisch tätigbaren Einrichtung verform- oder zusammendrückbar ist.

5. Vorrichtung nach einem der Ansprüche 1, **gekennzeichnet durch** eine mit dem Energiespeicher zusammenwirkende Übersetzungseinrichtung (8, 9) zur Umsetzung der vom Energiespeicher freigesetzten Kräfte.

6. Vorrichtung nach Anspruch 5, **dadurch gekennzeichnet,** daß die Übersetzungseinrichtung als Getriebe (8, 9) ausgebildet ist.

7. Vorrichtung nach Anspruch 6, **dadurch gekennzeichnet,** daß das Getriebe (8, 9) ein variables Übersetzungsverhältnis aufweist.

8. Vorrichtung nach Anspruch 7, **dadurch gekennzeichnet,** daß das Übersetzungsverhältnis in Abhängigkeit vom Ladezustand des Energiespeichers und/oder in Abhängigkeit von den an der Übersetzungseinrichtung vorliegenden Bewegungszuständen einstellbar ist.

9. Vorrichtung nach Anspruch 8, **dadurch gekennzeichnet,** daß das Übersetzungsverhältnis in Abhängigkeit von der Eingangs- und/oder Ausgangsdrehzahl einstellbar ist.

10. Vorrichtung nach einem Anspruch 1, **dadurch gekennzeichnet,** daß die Einrichtung zur Dosierung der vom Energiespeicher freigesetzten Kräfte als Bremseinrichtung (10) ausgelegt ist.

11. Vorrichtung nach einem der Ansprüche 1, **dadurch gekennzeichnet,** daß der Energiespeicher austauschbar ist.

12. Vorrichtung nach Anspruch 1, **gekennzeichnet durch** eine Umkehrstufe zur Rückführung von an einen Verbraucher abgegebener Energie in den Energiespeicher.

Figur

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 337 622 (JOHNSON)<br>* Spalte 3, Zeilen 30-63; Figuren 1-3 * | 1,2,4-6 | F 03 G 1/00 |
| A | | 11 | |
| | --- | | |
| X | PATENT ABSTRACTS OF JAPAN, Band 9, Nr. 249 (M-419)[1972], 5. Oktober 1985; & JP-A-60 101 281 (SHIGEZOU TATSUMI) 05-06-1985<br>* Insgesamt * | 1,2,4,5 | |
| | --- | | |
| X | EP-A-0 071 112 (PIRELLI)<br>* Seite 2, Zeile 32 - Seite 3, Zeile 33; Seite 7, Zeilen 15-36; Seite 11, Zeilen 30-32; Figur 1 * | 1,4 | |
| A | | 10 | |
| | --- | | |
| X | US-A-3 958 900 (TAKAHIRO UENO)<br>* Spalte 1, Zeilen 9-11,36-40; Spalte 2, Zeilen 1,2; Figur 1 * | 1,3 | |
| | --- | | |
| A | US-A-3 995 718 (NAKAMORI)<br>* Spalte 1, Zeilen 3-10; Spalte 2, Zeilen 62-64; Figur 1 * | 1,2,4-6 ,9 | **RECHERCHIERTE SACHGEBIETE (Int. Cl.4)** |
| | --- | | F 03 G |
| A | FR-A-2 466 638 (THUAL)<br>* Seite 2, Zeile 4 - Seite 3, Zeile 20; Seite 7, Zeilen 21-27; Figur 1 * | 7,8,12 | |
| | --- | | |
| A | FR-A- 826 885 (OEHMICHEN)<br>* Seite 3, Zeilen 26-36; Figur 2 * | 1,2,4-6 ,10 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 12-09-1988 | LEFEBVRE L.J.F. |